# EUROPEAN PATENT SPECIFICATION

(11) **EP 3 591 918 B1**
(45) Date of publication and mention of the grant of the patent: **15.09.2021**
(21) Application number: 18868646.3
(22) Date of filing: 10.05.2018
(51) Int. Cl.: H04L 27/12, B61L 3/12, G01S 1/00, B61L 27/00, B61L 25/00, B61L 23/00, B61L 3/00, H04L 27/14

(54) **METHOD AND SYSTEM FOR IMPLEMENTING DATA TRANSMISSION USING GROUND BALISE**
VERFAHREN UND SYSTEM ZUR IMPLEMENTIERUNG EINER DATENÜBERTRAGUNG UNTER VERWENDUNG EINER BODENBALISE
PROCÉDÉ ET SYSTÈME PERMETTANT DE METTRE EN OEUVRE UNE TRANSMISSION DE DONNÉES À L'AIDE D'UNE BALISE DE MASSE

(30) Priority: 20.10.2017 CN 201710983389
(43) Date of publication of application: 08.01.2020
(73) Proprietor: CRSC RESEARCH & DESIGN INSTITUTE GROUP CO., LTD., Fengtai District Beijing 100070 (CN)
(72) Inventor: ZHENG, Guiyan, Beijing 100070 (CN); YANG, Guanglun, Beijing 100070 (CN); CHEN, Guang, Beijing 100070 (CN); DING, Huan, Beijing 100070 (CN); SUN, Guoying, Beijing 100070 (CN); ZHANG, Shengwen, Beijing 100070 (CN); YAN, Bing, Beijing 100070 (CN); WANG, Guoying, Beijing 100070 (CN); MU, Zhenghui, Beijing 100070 (CN); LI, Zhiyu, Beijing 100070 (CN); LIU, Zhen, Beijing 100070 (CN); CHENG, Bangfeng, Beijing 100070 (CN)
(74) Representative: Würmser, Julian
(86) International application number: PCT/CN2018/086262
(87) International publication number: WO 2019/076039

(56) References cited:
- CN-A- 102 237 891
- CN-A- 102 237 891
- CN-A- 107 995 136
- CN-B- 103 078 659
- CN-U- 205 706 707
- CN-U- 205 706 707
- US-A1- 2015 198 712

## Description

### TECHNICAL FIELD

The present disclosure relates to a field of communications technology, and more particularly, to a fixed ground balise, a switchable ground balise and corresponding methods.

### BACKGROUND

A balise is intermittent dvice for information transmission from the ground to a train, and includes a fixed balise and a controlled (switchable) balise. The balise has the main application of providing reliable ground fixed information and variable information to Automatic Train Protection (ATP) onboard equipment. The balise is transmission equipment capable of sending telegram information to an onboard subsystem, and not only can transmit the fixed information, but also can be connected with a trackside unit to transmit the variable information. Balise equipment transmits information to the ATP onboard equipment, including: basic line parameters, such as line gradient, track section and the like; line speed information, such as maximum line permissive speed, maximum train permissive speed and the like; temporary speed restriction information, i.e., when a train running speed is restricted due to reasons of construction and the like, the temporary speed restriction information is provided to the train; station route information, i.e., according to a station train arrival and departure route, parameters of "line gradient", "line speed", "track section" and the like are provided to the train; switch information, i.e., a lateral train running permissive speed of a front switch is given out; special positioning information, such as lifting bow, access of a tunnel, whistling, train positioning and the like; and other information, such as fixed obstacle information, train running target data, linking data and the like.

The fixed balise is used for sending fixed data and is used for providing the line fixed parameters, e.g., the line gradient, the line permissive speed, track circuit parameters, linking information, train control level switching and the like.

The switchable balise is used for transmitting variable information. The switchable balise needs to be connected with Lineside Electronic Unit (LEU) equipment by a special balise cable, and can variably transmit balise telegram information to the train according to a telegram sent by the LEU equipment. The switchable balise is connected with an LEU for sending a telegram from the LEU, and in an existing line speed-up section, the switchable balise is arranged at an inbound end and an outbound section of a station and mainly sends the route information and the temporary speed restriction information.

Whether the fixed balise or the switchable balise has the same working principle. When the train passes through a position above the ground balise, after the balise receives electromagnetic energy sent by an intermittent information receiving antenna of the ATP onboard equipment, the balise can convert the energy into a working power, start up an electronic circuit to work and cyclically send out a 1023-bit balise transmission telegram which is pre-stored or transmitted by the LEU, until the electromagnetic energy disappears.

The balise equipment can be simply understood as a data storage and a sender, and when an onboard antenna activates the balise, the balise sends a balise telegram stored by the balise or a balise telegram transmitted by the LEU. Authenticity and validity of stored data and transmitted data of the balise are very important for safe running of a vehicle.

Therefore, a technology is required to enable the fixed or switchable ground balise to perform authentic and valid transmission of data.

CN 205 706 707 U aims to disclose a transponder system with a controllable message output, a controllable transponder and a transponder reader/writer. The transponder system with controllable message output includes a controllable transponder and a transponder reader; the transponder reader is used to write message data and/or switch instructions to the controllable transponder; the switch instructions control the drive to be in an open state or a closed state.

CN 102 237 891 A aims to disclose a transponder ground equipment, which comprises a passive transponder, an active transponder and a ground electronic unit, wherein the passive transponder is used for transmitting fixed data information, the active transponder is used for transmitting real-time data information; and the ground electronic unit is connected with the active transponder, and is used for providing the real-time data information for the active transponder.

### SUMMARY

The present disclosure provides a fixed ground balise, a switchable ground balise and corresponding methods for transmitting data by using fixed and switchable ground balises, so as to solve a problem how to provide reliable ground fixed information and variable information for ATP onboard equipment.

In order to solve the above-mentioned problem, the present disclosure provides a method for transmitting data by using a fixed ground balise. The method includes:
Receiving an instruction of proceeding to an updating mode and receiving the updating data for vehicle running control data from a control unit by the fixed ground balise;
Modifying the vehicle running control data in a data storage unit according to the updating data, and storing the updated vehicle running control data to the data storage unit;
Receiving an instruction of proceeding to a working mode from the control unit;
Carrying out Frequency Shift Keying (FSK) modulation on the vehicle running control data by a modulation unit to obtain the modulated vehicle running control data;
Receiving a carrier frequency signal from onboard equipment by utilizing a first antenna unit;
Converting energy of the carrier frequency signal into a working power of the ground balise; and
Sending the modulated vehicle running control data to an onboard balise of the onboard equipment by the ground balise through utilizing the first antenna unit wherein the vehicle running control data is control data for running a vehicle.

Wherein the method further includes arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

On the basis of another aspect of the present disclosure, there is provided a method for transmitting data by using a switchable ground balise. The method includes:
Receiving an instruction of proceeding to an updating mode from a control unit by the switchable ground balise;
Receiving updating data for vehicle running control data from an LEU by the switchable ground balise;
Carrying out FSK modulation on the vehicle running control data by a modulation unit to obtain the modulated vehicle running control data;
Receiving a carrier frequency signal from onboard equipment by utilizing a first antenna unit; and
Sending the modulated vehicle running control data to an onboard balise of the onboard equipment by the ground balise through utilizing the first antenna unit wherein the vehicle running control data is control data for running a vehicle.

Wherein, the method further includes:
Arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

In one embodiment, the method further includes:
Arranging the capacitor at the first antenna unit, and connecting an overvoltage protection unit with the capacitor so as to control the voltage within a safety voltage range.

In one embodiment, the method includes:
When the vehicle running control data stored in the data storage unit needs to be modified, proceeding to the updating mode according to the received instruction of the control unit so as to modify the vehicle running control data; and
When the vehicle running control data stored in the data storage unit needs to be sent, proceeding to the working mode according to the received instruction of the control unit so as to send the vehicle running control data.

In one embodiment, the method includes:
Providing a communication connection with the LEU; and
Converting Differential Bi Phase Level (DBPL) coded information which is received by the LEU and exceeds a conventional digital transmission limit into the vehicle running control data of the ground balise.

In one embodiment, the method includes:
Receiving the modulated vehicle running control data by the onboard balise through a second antenna unit, to control running of a vehicle according to the received vehicle running control data.

On the basis of yet another aspect of the present disclosure, there is provided a fixed ground balise. The fixed ground balise includes:
A control unit, which is used for receiving an instruction of proceeding to an updating mode; and receiving an instruction of proceeding to a working mode;
A mode selection unit, which is used for enabling the fixed ground balise to select to proceed to the updating mode or the working mode according to the received instruction of the control unit;
A first antenna unit, the fixed ground balise receiving updating data for vehicle running control data through the first antenna unit; a carrier frequency signal being received from onboard equipment by utilizing the first antenna unit; and the fixed ground balise sending the modulated vehicle running control data to an onboard balise of the onboard equipment by utilizing the first antenna unit;
A power unit, which is used for converting energy of the carrier frequency signal into a working power of the ground balise;
A data storage unit, which is used for modifying the vehicle running control data in the data storage unit according to the updating data and storing the updated vehicle running control data to the data storage unit; and
A modulation unit, which is used for carrying out FSK modulation of the vehicle running control data to obtain the modulated vehicle running control data wherein the vehicle running control data is control data for running a vehicle.

On the basis of still a further aspect of the present disclosure, there is provided an switchable ground balise. The switchable ground balise includes:
A control unit, which is used for receiving an instruction of proceeding to an updating mode; and receiving an instruction of proceeding to a working mode;
A mode selection unit, which is used for enabling the switchable ground balise to select to proceed to the updating mode or the working mode according to the received instruction of the control unit;
A first antenna unit, the switchable ground balise receiving updating data for vehicle running control data from an LEU through the first antenna unit; a carrier frequency signal being received from onboard equipment by utilizing the first antenna unit; and the switchable ground balise sending the modulated vehicle running control data to an onboard balise of the onboard equipment by utilizing the first antenna unit;
A data storage unit, which is used for modifying the vehicle running control data in the data storage unit according to the updating data and storing the updated vehicle running control data to the data storage unit; and
A modulation unit, which is used for carrying out FSK modulation of the vehicle running control data to obtain the modulated vehicle running control data wherein the vehicle running control data is control data for running a vehicle.

Wherein, the fixed ground balise further includes:
An amplitude limitation unit, which is used for arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

Wherein, the switchable ground balise further includes:
An amplitude limitation unit, which is used for arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

In one embodiment, the fixed ground balise further includes:
An overvoltage protection unit, which is used for arranging the capacitor at the first antenna unit, the overvoltage protection unit being connected with the capacitor for controlling the voltage within a safety voltage range.

In one embodiment, the switchable ground balise further includes:
An overvoltage protection unit, which is used for arranging the capacitor at the first antenna unit, the overvoltage protection unit being connected with the capacitor for controlling the voltage within a safety voltage range.

In one embodiment, the mode selection unit is further used for: when the vehicle running control data stored in the data storage unit needs to be modified, proceeding to the updating mode according to the received instruction of the control unit so as to modify the vehicle running control data; and
When the vehicle running control data stored in the data storage unit needs to be sent, proceeding to the working mode according to the received instruction of the control unit so as to send the vehicle running control data.

In one embodiment, the switchable ground balise further includes:
An interface unit, which is used for providing a communication connection with the LEU; and

A data conversion unit, which is used for converting DBPL coded information which is received by the LEU and exceeds a conventional digital transmission limit into the vehicle running control data of the ground balise.

The method for transmitting data by using the fixed ground balise or the switchable ground balise, as provided by the technical solution of the present disclosure, can meet the requirements of the onboard equipment and accurately send effective data information and can more effectively ensure running safety of the vehicle.

### BRIEF DESCRIPTION OF THE DRAWINGS

With reference to the drawings below, the exemplary embodiments of the present disclosure can be more completely understood:
FIG 1 is a flow chart of a method for transmitting data by using a fixed ground balise according to an aspect of the present disclosure;
FIG 2 is a flow chart of a method for transmitting data by using an switchable ground balise according to an aspect of the present disclosure;
FIG 3 is a structural schematic diagram of an alternating current amplitude limitation circuit in the method for transmitting data by using the switchable ground balise according to the embodiment of the present disclosure;
FIG 4 is a structural schematic diagram of an overvoltage protection circuit in the method for transmitting data by using the switchable ground balise according to the embodiment of the present disclosure;
FIG. 5 is a structural schematic diagram of a fixed ground balise according to an aspect of the present disclosure; and
FIG 6 is a structural schematic diagram of an switchable ground balise according to an aspect of the present disclosure.

### DETAILED DESCRIPTION

Now exemplary embodiments of the present disclosure are illustrated with reference to the drawings, but the present disclosure can be implemented in many different forms and not limited to the embodiments described herein, and providing those embodiments is to completely disclose the present disclosure in detail and fully convey the scope of the present disclosure to those skilled in the art. Terms expressed in the exemplary embodiments in the drawings are not intended to limit the present disclosure. In the drawings, the same units/components use the same reference signs.

Unless otherwise defined, the terms (including technical and scientific terms) here should be of general meaning as understood by those skilled in the art. In addition, it can be understood that terms defined by commonly-used dictionaries should be understood to have consistent meanings with contents in the fields related thereto, but not be understood as idealized or too formal meanings.

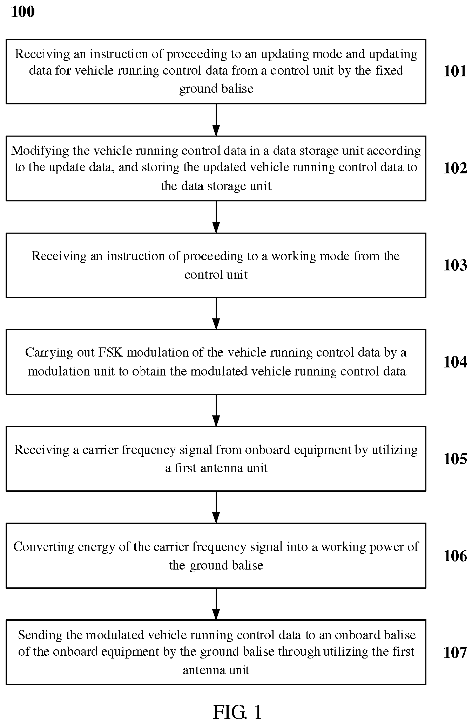

FIG 1 is a flow chart of a method for transmitting data by using a fixed ground balise according to an aspect of the present disclosure. An aspect of the present disclosure provides a method 100 for transmitting data by using a fixed ground balise. As shown in FIG 1, the method 100 starts from step S101:
S101: the fixed ground balise receives an instruction of proceeding to an updating mode, and updating data for vehicle running control data from a control unit fixed;
S102: modifying the vehicle running control data in a data storage unit according to the updating data, and storing the updated vehicle running control data to the data storage unit;
S103: receiving an instruction of proceeding to a working mode from the control unit;
S104: carrying out FSK modulation on the vehicle running control data by a modulation unit to obtain the modulated vehicle running control data;
S105: receiving a carrier frequency signal from onboard equipment by utilizing a first antenna unit;
S106: converting energy of the carrier frequency signal into a working power of the ground balise; and
S107: sending the modulated vehicle running control data to an onboard balise of the onboard equipment by the ground balise through utilizing the first antenna unit.

In one embodiment, the method includes:
When the vehicle running control data stored in the data storage unit needs to be modified, proceeding to the updating mode according to the received instruction of the control unit so as to modify the vehicle running control data; and
When the vehicle running control data stored in the data storage unit needs to be sent, proceeding to the working mode according to the received instruction of the control unit so as to send the vehicle running control data.

In one embodiment, the method includes:
Providing a communication connection with an LEU; and
Converting DBPL coded information which is received by the LEU and exceeds a conventional digital transmission limit into the vehicle running control data of the ground balise.

In one embodiment, the method includes:
Receiving the modulated vehicle running control data by the onboard balise through a second antenna unit, to control running of a vehicle according to the received vehicle running control data.

Wherein, the method further includes:
Arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

In the present application, the amplitude of the received carrier frequency signal is limited within the preset range by the amplitude limitation circuit. The present application is exemplarily illustrated by taking an alternating current amplitude limitation circuit as an example, but is not limited to the alternating current. In the present application, the alternating current amplitude limitation circuit includes: a tuning capacitor arranged at corner of the antenna; and a magnetic bead connected with the tuning capacitor and used for extracting a voltage of both ends of the tuning capacitor. In one embodiment of the present disclosure, the magnetic bead is of a parallel structure. A Schottky diode connected with the magnetic bead is used for carrying out bridge rectification of the extracted voltage. In one embodiment of the present disclosure, each bridge arm of the Schottky diode includes a plurality of diodes. In another embodiment of the present disclosure, each bridge arm of the Schottky diode includes four diodes, and a triode which is used for clamping the rectified voltage; and when the voltage at both ends of the tuning capacitor is excessively high, the Schottky diode is conducted, charges are discharged for both ends of the tuning capacitor by the triode, and meanwhile an impedance of the magnetic bead is connected in series; and the balise provided by the present disclosure further includes an overvoltage protection module connected with the tuning capacitor of an alternating current amplitude limitation module.

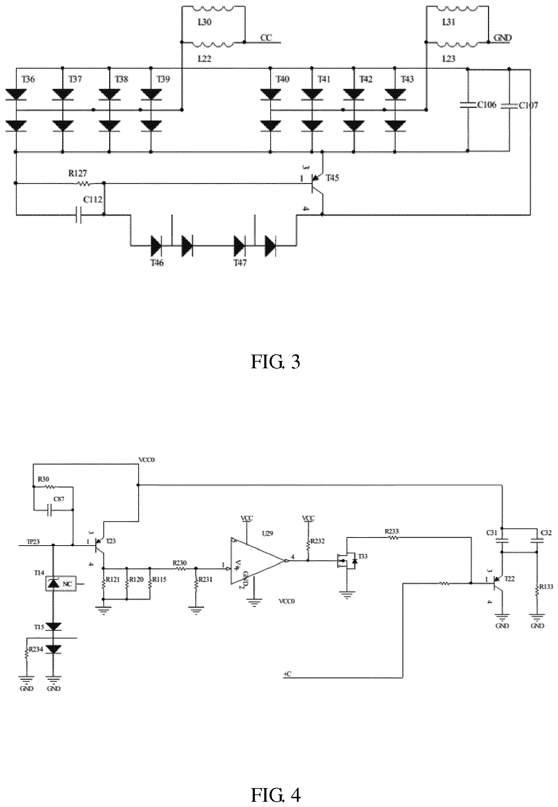

FIG 3 is a structural schematic diagram of the alternating current amplitude limitation circuit in the method for transmitting data by using the switchable ground balise according to the embodiment of the present disclosure. As shown in FIG. 3, in the present application, the tuning capacitors on four corners of the antenna are all connected with overvoltage protection circuits, and the overvoltage protection circuits have consistent structures and parameters, and thus, only the overvoltage protection circuits connected with both sides of a capacitor C116 are selected.

The voltages at both ends of the capacitor is extracted by the magnetic bead, the magnetic bead uses a parallel structure to improve a flow rate, bridge rectification is carried out by the Schottky diode after the voltage is extracted, and each bridge arm uses four diodes to improve the flow rate. With T46 and T47 as reference potentials, the rectified direct current voltage is clamped by a triode T, and when the voltage at both ends of the capacitor is excessively high, a rectifier tube is conducted, charges are discharged for both ends of the capacitor by the triode T, and it is equivalent to change capacitive reactance of the capacitor and meanwhile the impedance of the magnetic bead is connected in series.

Wherein, the method further includes:
Arranging the capacitor at the first antenna unit, and connecting an overvoltage protection unit with the capacitor so as to control the voltage within a safety voltage range. In the present application, the voltage is controlled within the safety voltage range by the overvoltage protection circuit.

FIG. 4 is a structural schematic diagram of the overvoltage protection circuit in the method for transmitting data by using the switchable ground balise according to the embodiment of the present disclosure. In the present application, two sets of overvoltage protection circuits are arranged. In one embodiment of the present disclosure, the overvoltage protection circuit includes a filter capacitor. When a read-write operation is carried out, the overvoltage protection circuit connects the filter capacitor in series into a power circuit.

As shown in FIG. 4, two sets of overvoltage protection circuits are designed in the embodiment of the present application for redundant multiplexing. With T14 and T15 as reference potentials, a Voltage Controlled Crystal Oscillator (VCCO) is clamped by shunting of T23 so as to clamp the VCCO on 3.9V A +C end is connected to a coding Complex Programmable Logic Device (CPLD), when the read-write operation is carried out, T22 is conducted, capacitors C31 and C32 are connected in series into the circuit, and the filter capacitor is added.

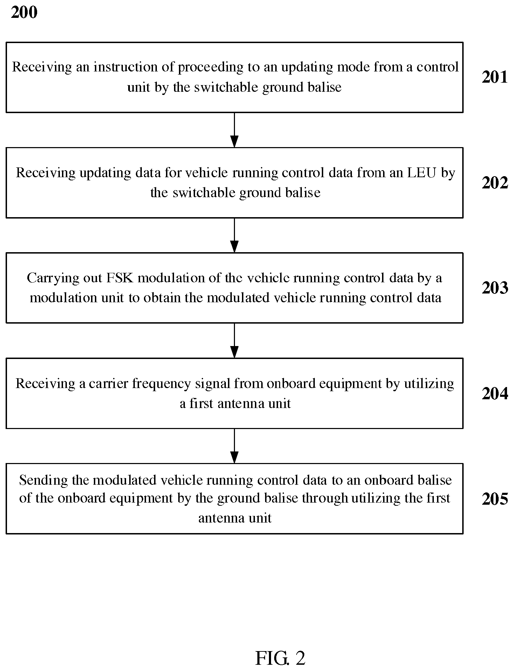

FIG. 2 is a flow chart of a method for transmitting data by using an switchable ground balise according to an aspect of the present disclosure. As shown in FIG. 2, the method 200 for transmitting data by using the switchable ground balise includes:
S201: the switchable ground balise receives an instruction of proceeding to an updating mode from a control unit;
S202: the switchable ground balise receives updating data for vehicle running control data from an LEU;
S203: carrying out FSK modulation on the vehicle running control data by a modulation unit to obtain the modulated vehicle running control data;
S204: receiving a carrier frequency signal from onboard equipment by utilizing a first antenna unit; and
S205: sending the modulated vehicle running control data to an onboard balise of the onboard equipment by the ground balise through utilizing the first antenna unit.

In one embodiment, the method 200 further includes:
When the vehicle running control data stored in the data storage unit needs to be modified, proceeding to the updating mode according to the received instruction of the control unit so as to modify the vehicle running control data; and
When the vehicle running control data stored in the data storage unit needs to be sent, proceeding to the working mode according to the received instruction of the control unit so as to send the vehicle running control data.

In one embodiment the method 200 further includes:
Providing a communication connection with the LEU;

Converting DBPL coded information which is received by the LEU and exceeds a conventional digital transmission limit into the vehicle running control data of the ground balise.

In one embodiment, the method 200 further includes:
Receiving the modulated vehicle running control data by the onboard balise through a second antenna unit, to control running of a vehicle according to the received vehicle running control data.

Wherein, the method 200 further includes:
Arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

In the present application, the amplitude of the received carrier frequency signal is limited within the preset range by an alternating current amplitude limitation circuit. In the present application, the alternating current amplitude limitation circuit includes: a tuning capacitor arranged at corner of the antenna; and a magnetic bead connected with the tuning capacitor and used for extracting a voltage of both ends of the tuning capacitor. In one embodiment of the present disclosure, the magnetic bead is of a parallel structure. A Schottky diode connected with the magnetic bead is used for carrying out bridge rectification on the extracted voltage. In one embodiment of the present disclosure, each bridge arm of the Schottky diode includes a plurality of diodes. In another embodiment of the present disclosure, each bridge arm of the Schottky diode includes four diodes, and a triode which is used for clamping the rectified voltage; and when the voltage at both ends of the tuning capacitor is excessively high, the Schottky diode is conducted, charges are discharged for both ends of the tuning capacitor by the triode, and meanwhile an impedance of the magnetic bead is connected in series; and the balise provided by the present disclosure further includes an overvoltage protection module connected with the tuning capacitor of an alternating current amplitude limitation module. The structural schematic diagram of the alternating current amplitude limitation circuit refers to description in FIG. 3, and is not repeated herein.

In one embodiment, the method 200 further includes:
Arranging the capacitor at the first antenna unit, and connecting an overvoltage protection unit with the capacitor so as to control the voltage within a safety voltage range. In the present application, the voltage is controlled within the safety voltage range by the overvoltage protection circuit. In the present application, two sets of overvoltage protection circuits are arranged. In one embodiment of the present disclosure, the overvoltage protection circuit includes a filter capacitor. When the read-write operation is carried out, the overvoltage protection circuit connects the filter capacitor in series into a power circuit. The structural schematic diagram of the overvoltage protection circuit in the present application is as shown in FIG. 4, and is not repeated herein.

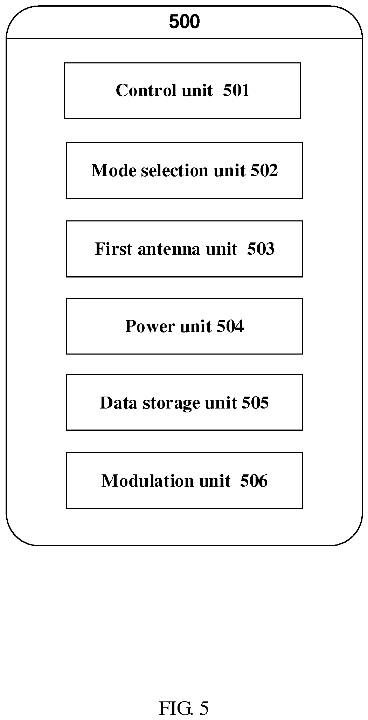

FIG. 5 is a structural schematic diagram of a fixed ground balise according to an aspect of the present disclosure. As shown in FIG. 5, the fixed ground balise 500 includes:
A control unit 501, which is used for receiving an instruction of proceeding to an updating mode; and receiving an instruction of proceeding to a working mode;
A mode selection unit 502, which is used for enabling the fixed ground balise to select to proceed to the updating mode or the working mode according to the received instruction of the control unit;
A first antenna unit 503, the fixed ground balise receiving updating data for vehicle running control data through the first antenna unit; a carrier frequency signal being received from onboard equipment by utilizing the first antenna unit; and the fixed ground balise sending the modulated vehicle running control data to an onboard balise of the onboard equipment by utilizing the first antenna unit;
A power unit 504, which is used for converting energy of the carrier frequency signal into a working power of the ground balise;
A data storage unit 505, which is used for modifying the vehicle running control data in the data storage unit according to the updating data and storing the updated vehicle running control data to the data storage unit; and
A modulation unit 506, which is used for carrying out FSK modulation of the vehicle running control data to obtain the modulated vehicle running control data.

Wherein, the fixed ground balise further includes:
An alternating current amplitude limitation unit, which is used for arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

In one embodiment, the fixed ground balise further includes:
An overvoltage protection unit, which is used for arranging the capacitor at the first antenna unit, the overvoltage protection unit being connected with the capacitor for controlling the voltage within a safety voltage range.

In one embodiment, the mode selection unit is further used for: when the vehicle running control data stored in the data storage unit needs to be modified, proceeding to the updating mode according to the received instruction of the control unit so as to modify the vehicle running control data; and

When the vehicle running control data stored in the data storage unit needs to be sent, proceeding to the working mode according to the received instruction of the control unit so as to send the vehicle running control data.

The fixed ground balise 500 according to the aspect of the present disclosure corresponds to the method 100 for transmitting data by using the fixed ground balise according to another aspect of the present disclosure, and is not repeated herein.

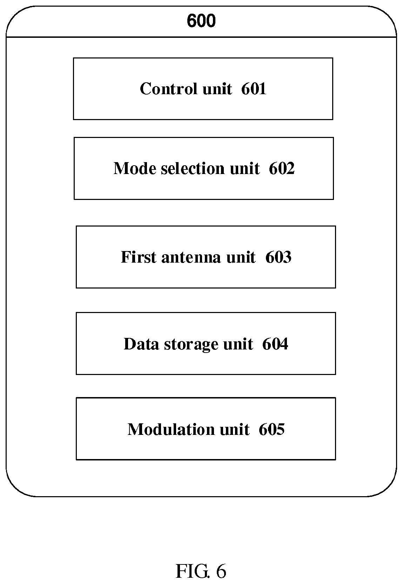

FIG. 6 is a structural schematic diagram of an switchable ground balise according to an aspect of the present disclosure. As shown in FIG 6, the switchable ground balise 600 includes:
A control unit 601, which is used for receiving an instruction of proceeding to an updating mode; and receiving an instruction of proceeding to a working mode;
A mode selection unit 602, which is used for enabling the switchable ground balise to select to proceed to the updating mode or the working mode according to the received instruction of the control unit;
A first antenna unit 603, the switchable ground balise receiving updating data for vehicle running control data from an LEU through the first antenna unit; a carrier frequency signal being received from onboard equipment by utilizing the first antenna unit; and the switchable ground balise sending the modulated vehicle running control data to an onboard balise of the onboard equipment by utilizing the first antenna unit;
A data storage unit 604, which is used for modifying the vehicle running control data in the data storage unit according to the update data and storing the updated vehicle running control data to the data storage unit; and
A modulation unit 605, which is used for carrying out FSK modulation of the vehicle running control data to obtain the modulated vehicle running control data.

Wherein, the switchable ground balise further includes:
An alternating current amplitude limitation unit, which is used for arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

In one embodiment, the switchable ground balise further includes:
An overvoltage protection unit, which is used for arranging the capacitor at the first antenna unit, the overvoltage protection unit being connected with the capacitor for controlling the voltage within a safety voltage range.

In one embodiment the switchable ground balise further includes:
An interface unit, which is used for providing a communication connection with the LEU; and
A data conversion unit, which is used for converting DBPL coded information which is received by the LEU and exceeds a conventional digital transmission limit into the vehicle running control data of the ground balise.

The fixed ground balise 500 according to the aspect of the present disclosure corresponds to the method 100 for transmitting data by using the fixed ground balise according to another aspect of the present disclosure, and is not repeated herein.

The present disclosure has been described with reference to a few embodiments. However, those skilled in the art commonly know that as defined by the appended claims, besides the above-disclosed embodiments of the present disclosure, other embodiments equivalently fall within the scope of the present disclosure.

Generally, all terms used in the claims are explained according to general meanings in the art, unless otherwise defined. All the references "a/the above-mentioned/the [device, component and the like]" are openly explained as at least one example in the device, component and the like, unless otherwise defined. The steps of any methods disclosed herein are all necessary to execute according to the disclosed accurate sequence, unless otherwise defined.

## Claims

1. A method for transmitting data by using a fixed ground balise, comprising:
receiving (101) an instruction of proceeding to an updating mode and updating data for vehicle running control data from a control unit by the fixed ground balise;
modifying (102) the vehicle running control data in a data storage unit according to the updating data, and storing the updated vehicle running control data to the data storage unit;
receiving (103) an instruction of proceeding to a working mode by the control unit;
carrying out (104) Frequency Shift Keying, FSK, modulation of the vehicle running control data by a modulation unit to obtain the modulated vehicle running control data;
receiving (105) a carrier frequency signal from onboard equipment by utilizing a first antenna unit;
converting (106) energy of the carrier frequency signal into a working power of the ground balise; and
sending (107) the modulated vehicle running control data to an onboard balise of the onboard equipment by the ground balise through utilizing the first antenna unit;
wherein the vehicle running control data is control data for running a vehicle;
**characterized by** arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

2. A method for transmitting data by using a switchable ground balise, comprising:
receiving (201) an instruction of proceeding to an updating mode from a control unit by the switchable ground balise;
receiving (202) updating data for vehicle running control data from a Lineside Electronic Unit, LEU, by the switchable ground balise;
carrying out (203) FSK modulation of the vehicle running control data by a modulation unit to obtain the modulated vehicle running control data;
receiving (204) a carrier frequency signal from onboard equipment by utilizing a first antenna unit; and
sending (205) the modulated vehicle running control data to an onboard balise of the onboard equipment by the ground balise through utilizing the first antenna unit;
wherein the vehicle running control data is control data for running a vehicle;
**characterized by** arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

3. The method according to claim 1 or 2, further comprising:
arranging the capacitor at the first antenna unit, and connecting an overvoltage protection unit with the capacitor so as to control the voltage within a safety voltage range.

4. The method according to claim 1, comprising:
when the vehicle running control data stored in the data storage unit needs to be modified, proceeding to the updating mode according to the received instruction of the control unit so as to modify the vehicle running control data; and
when the vehicle running control data stored in the data storage unit needs to be sent, proceeding to the working mode according to the received instruction of the control unit so as to send the vehicle running control data.

5. The method according to claim 2, comprising:
providing a communication connection with the LEU;
converting Differential Bi Phase Level, DBPL, coded information which is received by the LEU and exceeds a conventional digital transmission limit into the vehicle running control data of the ground balise.

6. The method according to claim 1 or 2, comprising:
receiving the modulated vehicle running control data by the onboard balise through a second antenna unit, to control running of a vehicle according to the received vehicle running control data.

7. A fixed ground balise, comprising:
a control unit, which is used for receiving an instruction of proceeding to an updating mode and receiving an instruction of proceeding to a working mode;
a mode selection unit, which is used for enabling the fixed ground balise to select to proceed to the updating mode or the working mode according to the received instruction of the control unit;
a first antenna unit, the fixed ground balise receiving updating data of vehicle running control data through the first antenna unit, a carrier frequency signal being received from onboard equipment by utilizing the first antenna unit, and the fixed ground balise sending the modulated vehicle running control data to an onboard balise of the onboard equipment by utilizing the first antenna unit;
a power unit, which is used for converting energy of the carrier frequency signal into a working power of the ground balise;
a data storage unit, which is used for modifying the vehicle running control data in the data storage unit according to the updating data and storing the updated vehicle running control data to the data storage unit; and
a modulation unit, which is used for carrying out FSK modulation of the vehicle running control data to obtain the modulated vehicle running control data;
wherein the vehicle running control data is control data for running a vehicle;
**characterized by** an amplitude limitation unit, which is used for arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

8. A switchable ground balise, comprising:
a control unit, which is used for receiving an instruction of proceeding to an updating mode and receiving an instruction of proceeding to a working mode;
a mode selection unit, which is used for enabling the switchable ground balise to select to proceed to the updating mode or the working mode according to the received instruction of the control unit;
a first antenna unit, the switchable ground balise receiving updating data for vehicle running control data from a Lineside Electronic Unit, LEU, through the first antenna unit, a carrier frequency signal being received from onboard equipment by utilizing the first antenna unit, and the switchable ground balise sending the modulated vehicle running control data to an onboard balise of the onboard equipment by utilizing the first antenna unit;
a data storage unit, which is used for modifying the vehicle running control data in the data storage unit according to the updating data and storing the updated vehicle running control data to the data storage unit; and
a modulation unit, which is used for carrying out FSK modulation of the vehicle running control data to obtain the modulated vehicle running control data;
wherein the vehicle running control data is control data for running a vehicle;
**characterized by** an amplitude limitation unit, which is used for arranging a capacitor at the first antenna unit, arranging a magnetic bead connected with the capacitor to extract a voltage at both ends of the capacitor, carrying out bridge rectification by a diode, and limiting an amplitude of the received carrier frequency signal within a preset range.

9. The fixed ground balise according to claim 7, further comprising:
an overvoltage protection unit, which is used for arranging the capacitor at the first antenna unit, the overvoltage protection unit being connected with the capacitor for controlling the voltage within a safety voltage range.

10. The switchable ground balise according to claim 8, further comprising:
an overvoltage protection unit, which is used for arranging the capacitor at the first antenna unit, the overvoltage protection unit being connected with the capacitor for controlling the voltage within a safety voltage range.

11. The fixed ground balise according to claim 7 or 9, wherein the mode selection unit is further used for: when the vehicle running control data stored in the data storage unit needs to be modified, proceeding to the updating mode according to the received instruction of the control unit so as to modify the vehicle running control data; and
when the vehicle running control data stored in the data storage unit needs to be sent, proceeding to the working mode according to the received instruction of the control unit so as to send the vehicle running control data.

12. The switchable ground balise according to claim 8 or 10, further comprising:
an interface unit, which is used for providing a communication connection with the LEU; and
a data conversion unit, which is used for converting Differential Bi Phase Level, DBPL, coded information which is received by the LEU and exceeds a conventional digital transmission limit into the vehicle running control data of the ground balise.

## Patentansprüche

1. Verfahren zum Übertragen von Daten unter Verwendung einer feststehenden Bodenbalise, umfassend:
Empfangen (101) einer Anweisung, zu einem Aktualisierungsmodus und Aktualisierungsdaten für Fahrzeugbetriebssteuerdaten überzugehen, von einer Steuereinheit durch die feststehende Bodenbalise;
Modifizieren (102) der Fahrzeugbetriebssteuerdaten in einer Datenspeichereinheit entsprechend den Aktualisierungsdaten und Speichern der aktualisierten Fahrzeugbetriebssteuerdaten in der Datenspeichereinheit;
Empfangen (103) einer Anweisung, zu einem Arbeitsmodus überzugehen, durch die Steuereinheit,
Ausführen (104) einer Frequenzumtastungsmodulation (*Frequency Shift Keying,* FSK) der Fahrzeugbetriebssteuerdaten durch eine Modulationseinheit, um die modulierten Fahrzeugbetriebssteuerdaten zu erhalten;
Empfangen (105) eines Trägerfrequenzsignals von einer Bordausrüstung durch Nutzung einer ersten Antenneneinheit;
Umwandeln (106) von Energie des Trägerfrequenzsignals in eine Arbeitsenergie der Bodenbalise; und
Senden (107) der modulierten Fahrzeugbetriebssteuerdaten an eine Bordbalise der Bordausrüstung durch die Bodenbalise unter Nutzung der ersten Antenneneinheit;
wobei es sich bei den Fahrzeugbetriebssteuerdaten um Steuerdaten zum Betreiben eines Fahrzeugs handelt;
**gekennzeichnet durch** Anordnen eines Kondensators an der ersten Antenneneinheit, Anordnen eines mit dem Kondensator verbundenen Magnetkügelchens, um eine Spannung an beiden Enden des Kondensators zu extrahieren, Durchführen einer Brückengleichrichtung durch eine Diode, und Begrenzen einer Amplitude des empfangenen Trägerfrequenzsignals auf innerhalb eines voreingestellten Bereichs.

2. Verfahren zum Übertragen von Daten unter Verwendung einer umschaltbaren Bodenbalise, umfassend:
Empfangen (201) einer Anweisung von einer Steuereinheit durch die umschaltbare Bodenbalise, zu einem Aktualisierungsmodus überzugehen;
Empfangen (202) von Aktualisierungsdaten für Fahrzeugbetriebssteuerdaten von einer leitungsseitigen Elektronikeinheit (*Lineside Electronic Device,* LEU) durch die umschaltbare Bodenbalise;
Ausführen (203) einer FSK-Modulation der Fahrzeugbetriebssteuerdaten durch eine Modulationseinheit, um die modulierten Fahrzeugbetriebssteuerdaten zu erhalten;
Empfangen (204) eines Trägerfrequenzsignals von einer Bordausrüstung durch Nutzung einer ersten Antenneneinheit; und
Senden (205) der modulierten Fahrzeugbetriebssteuerdaten an eine Bordbalise der Bordausrüstung durch die Bodenbalise unter Nutzung der ersten Antenneneinheit;
wobei es sich bei den Fahrzeugbetriebssteuerdaten um Steuerdaten zum Betreiben eines Fahrzeugs handelt;
**gekennzeichnet durch** Anordnen eines Kondensators an der ersten Antenneneinheit, Anordnen eines mit dem Kondensator verbundenen Magnetkügelchens, um eine Spannung an beiden Enden des Kondensators zu extrahieren, Durchführen einer Brückengleichrichtung durch eine Diode, und Begrenzen einer Amplitude des empfangenen Trägerfrequenzsignals auf innerhalb eines voreingestellten Bereichs.

3. Verfahren nach Anspruch 1 oder 2, darüber hinaus umfassend:
Anordnen des Kondensators am der ersten Antenneneinheit und Verbinden einer Überspannungsschutzeinheit mit dem Kondensator, um die Spannung auf innerhalb eines Sicherheitsspannungsbereichs zu regeln.

4. Verfahren nach Anspruch 1, umfassend:
wenn die in der Datenspeichereinheit gespeicherten Fahrzeugbetriebssteuerdaten modifiziert werden müssen, Übergehen zum Aktualisierungsmodus entsprechend der empfangenen Anweisung der Steuereinheit, um die Fahrzeugbetriebssteuerdaten zu modifizieren; und
wenn die in der Datenspeichereinheit gespeicherten Fahrzeugbetriebssteuerdaten versandt werden müssen, Übergehen zum Arbeitsmodus entsprechend der empfangenen Anweisung der Steuereinheit, um die Fahrzeugbetriebssteuerdaten zu versenden.

5. Verfahren nach Anspruch 2, umfassend:
Bereitstellen einer Kommunikationsverbindung mit der LEU;
Umwandeln von mit einem Differenzialzweiphasenpegel (*Differential Bi Phase Level,* DBPL) codierten Informationen, die durch die LEU empfangen werden und eine herkömmliche digitale Übertragungsgrenze überschreiten, in die Fahrzeugbetriebssteuerdaten der Bodenbalise.

6. Verfahren nach Anspruch 1 oder 2, umfassend:
Empfangen der modulierten Fahrzeugbetriebssteuerdaten durch die Bordbalise durch eine zweite Antenneneinheit, um den Betrieb eines Fahrzeugs entsprechend der empfangenen Fahrzeugbetriebssteuerdaten zu regeln.

7. Feststehende Bodenbalise, umfassend:
eine Steuereinheit, die dazu verwendet wird, eine Anweisung, zu einem Aktualisierungsmodus überzugehen, zu empfangen, und eine Anweisung, zu einem Arbeitsmodus überzugehen, zu empfangen;
eine Modusauswahleinheit, die dazu verwendet wird, es der feststehenden Bodenbalise zu ermöglichen, auszuwählen, entsprechend der empfangenen Anweisung der Steuereinheit zum Aktualisierungsmodus oder zum Arbeitsmodus überzugehen;
eine erste Antenneneinheit, wobei die feststehende Bodenbalise Aktualisierungsdaten der Fahrzeugbetriebssteuerdaten durch die erste Antenneneinheit empfängt, wobei ein Trägerfrequenzsignal von einer Bordausrüstung her durch Nutzung der ersten Antenneneinheit empfangen wird, und die feststehende Bodenbalise die modulierten Fahrzeugbetriebssteuerdaten zu einer Bordbalise der Bordausrüstung durch Nutzung der ersten Antenneneinheit sendet;
eine Energieeinheit, die dazu verwendet wird, Energie des Trägerfrequenzsignals in eine Arbeitsenergie der Bodenbalise umzuwandeln;
eine Datenspeichereinheit, die dazu verwendet wird, die Fahrzeugbetriebssteuerdaten in der Datenspeichereinheit entsprechend den Aktualisierungsdaten zu modifizieren und die aktualisierten Fahrzeugbetriebssteuerdaten in der Datenspeichereinheit zu speichern; und
eine Modulationseinheit, die dazu verwendet wird, eine FSK-Modulation der Fahrzeugbetriebssteuerdaten durchzuführen, um die modulierten Fahrzeugbetriebssteuerdaten zu erhalten;
wobei es sich bei den Fahrzeugbetriebssteuerdaten um Steuerdaten zum Betreiben eines Fahrzeugs handelt;
**gekennzeichnet durch** eine Amplitudenbegrenzungseinheit, die dazu verwendet wird, einen Kondensator an der ersten Antenneneinheit anzuordnen, ein mit dem Kondensator verbundenes Magnetkügelchen anzuordnen, um eine Spannung an beiden Enden des Kondensators zu extrahieren, eine Brückengleichrichtung durch eine Diode durchzuführen, und eine Amplitude des empfangenen Trägerfrequenzsignals auf innerhalb eines voreingestellten Bereichs zu begrenzen.

8. Umschaltbare Bodenbalise, umfassend:
eine Steuereinheit, die dazu verwendet wird, eine Anweisung, zu einem Aktualisierungsmodus überzugehen, zu empfangen, und eine Anweisung, zu einem Arbeitsmodus überzugehen, zu empfangen;
eine Modusauswahleinheit, die dazu verwendet wird, es der umschaltbaren Bodenbalise zu ermöglichen, auszuwählen, entsprechend der empfangenen Anweisung der Steuereinheit zum Aktualisierungsmodus oder zum Arbeitsmodus überzugehen;
eine erste Antenneneinheit, wobei die umschaltbare Bodenbalise Aktualisierungsdaten für Fahrzeugbetriebssteuerdaten von einer leitungsseitigen Elektronikeinheit (*Lineside Electronic Device,* LEU) durch die erste Antenneneinheit empfängt, wobei ein Trägerfrequenzsignal von einer Bordausrüstung her durch Nutzung der ersten Antenneneinheit empfangen wird, und die umschaltbare Bodenbalise die modulierten Fahrzeugbetriebssteuerdaten zu einer Bordbalise der Bordausrüstung durch Nutzung der ersten Antenneneinheit sendet;
eine Datenspeichereinheit, die dazu verwendet wird, die Fahrzeugbetriebssteuerdaten in der Datenspeichereinheit entsprechend den Aktualisierungsdaten zu modifizieren und die aktualisierten Fahrzeugbetriebssteuerdaten in der Datenspeichereinheit zu speichern; und
eine Modulationseinheit, die dazu verwendet wird, eine FSK-Modulation der Fahrzeugbetriebssteuerdaten durchzuführen, um die modulierten Fahrzeugbetriebssteuerdaten zu erhalten;
wobei es sich bei den Fahrzeugbetriebssteuerdaten um Steuerdaten zum Betreiben eines Fahrzeugs handelt;
**gekennzeichnet durch** eine Amplitudenbegrenzungseinheit, die dazu verwendet wird, einen Kondensator an der ersten Antenneneinheit anzuordnen, ein mit dem Kondensator verbundenes Magnetkügelchen anzuordnen, um eine Spannung an beiden Enden des Kondensators zu extrahieren, eine Brückengleichrichtung durch eine Diode durchzuführen, und eine Amplitude des empfangenen Trägerfrequenzsignals auf innerhalb eines voreingestellten Bereichs zu begrenzen.

9. Feststehende Bodenbalise nach Anspruch 7, darüber hinaus umfassend:
eine Überspannungsschutzeinheit, die dazu verwendet wird, den Kondensator an der ersten Antenneneinheit anzuordnen, wobei die Überspannungsschutzeinheit mit dem Kondensator verbunden wird, um die Spannung auf innerhalb eines Sicherheitsspannungsbereichs zu regeln.

10. Umschaltbare Bodenbalise nach Anspruch 8, darüber hinaus umfassend:
eine Überspannungsschutzeinheit, die dazu verwendet wird, den Kondensator an der ersten Antenneneinheit anzuordnen, wobei die Überspannungsschutzeinheit mit dem Kondensator verbunden wird, um die Spannung auf innerhalb eines Sicherheitsspannungsbereichs zu regeln.

11. Feststehende Bodenbalise nach Anspruch 7 oder 9, wobei die Modusauswahleinheit darüber hinaus dazu verwendet wird:
wenn die in der Datenspeichereinheit gespeicherten Fahrzeugbetriebssteuerdaten modifiziert werden müssen, entsprechend der empfangenen Anweisung der Steuereinheit zum Aktualisierungsmodus überzugehen, um die Fahrzeugbetriebssteuerdaten zu modifizieren; und,
wenn die in der Datenspeichereinheit gespeicherten Fahrzeugbetriebssteuerdaten versandt werden müssen, entsprechend der empfangenen Anweisung der Steuereinheit zum Arbeitsmodus überzugehen, um die Fahrzeugbetriebssteuerdaten zu versenden.

12. Umschaltbare Bodenbalise nach Anspruch 8 oder 10, darüber hinaus umfassend:
eine Schnittstelleneinheit, die dazu verwendet wird, eine Kommunikationsverbindung mit der LEU bereitzustellen; und
eine Datenumwandlungseinheit, die dazu verwendet wird, mit einem Differenzialzweiphasenpegel (*Differential Bi Phase Level,* DBPL) codierte Informationen, die durch die LEU empfangen werden und eine herkömmliche digitale Übertragungsgrenze überschreiten, in die Fahrzeugbetriebssteuerdaten der Bodenbalise umzuwandeln.

## Revendications

1. Procédé permettant de transmettre des données à l'aide d'une balise au sol fixe, comprenant :
la réception (101) d'une instruction de passer à un mode de mise à jour et de données de mise à jour pour des données de commande de marche de véhicule depuis une unité de commande par la balise au sol fixe ;
la modification (102) des données de commande de marche de véhicule dans une unité de stockage de données selon les données de mise à jour, et le stockage des données de commande de marche de véhicule mises à jour dans l'unité de stockage de données ;
la réception (103) d'une instruction de passer à un mode de travail par l'unité de commande ;
l'exécution (104) d'une modulation par déplacement de fréquence (*Frequency Shift Keying,* FSK) des données de commande de marche de véhicule par une unité de modulation pour obtenir les données de commande de marche de véhicule modulées ;
la réception (105) d'un signal de fréquence porteuse depuis un équipement embarqué moyennant une première unité d'antenne ;
la conversion (106) d'énergie du signal de fréquence porteuse en une puissance de travail de la balise au sol ; et
l'envoi (107) des données de commande de marche de véhicule modulées à une balise embarquée de l'équipement embarqué par la balise au sol moyennant la première unité d'antenne ;
sachant que les données de commande de marche de véhicule sont des données de commande pour la marche d'un véhicule ;
**caractérisé par** l'agencement d'un condensateur au niveau de la première unité d'antenne, l'agencement d'une bille magnétique connectée au condensateur pour extraire une tension aux deux extrémités du condensateur, l'exécution d'un redressement en pont par une diode, et la limitation d'une amplitude du signal de fréquence porteuse reçu dans une plage prédéterminée.

2. Procédé permettant de transmettre des données à l'aide d'une balise au sol commutable, comprenant :
la réception (201) d'une instruction de passer à un mode de mise à jour depuis une unité de commande par la balise au sol commutable ;
la réception (202) de données de mise à jour pour des données de commande de marche de véhicule depuis une unité électronique côté secteur (*Lineside Electronic Device,* LEU) par la balise au sol commutable ;
l'exécution (203) d'une modulation FSK des données de commande de marche de véhicule par une unité de modulation pour obtenir les données de commande de marche de véhicule modulées ;
la réception (204) d'un signal de fréquence porteuse depuis un équipement embarqué moyennant une première unité d'antenne ; et
l'envoi (205) des données de commande de marche de véhicule modulées à une balise embarquée de l'équipement embarqué par la balise au sol moyennant la première unité d'antenne ;
sachant que les données de commande de marche de véhicule sont des données de commande pour la marche d'un véhicule ;
**caractérisé par** l'agencement d'un condensateur au niveau de la première unité d'antenne, l'agencement d'une bille magnétique connectée au condensateur pour extraire une tension aux deux extrémités du condensateur, l'exécution d'un redressement en pont par une diode, et la limitation d'une amplitude du signal de fréquence porteuse reçu dans une plage prédéterminée.

3. Le procédé selon la revendication 1 ou 2, comprenant en outre :
l'agencement du condensateur au niveau de la première unité d'antenne, et la connexion d'une unité de protection contre la surtension au condensateur de manière à commander la tension dans une plage de tension de sécurité.

4. Le procédé selon la revendication 1, comprenant :
lorsque les données de commande de marche de véhicule stockées dans l'unité de stockage de données doivent être modifiées, le passage au mode de mise à jour selon l'instruction reçue de l'unité de commande de manière à modifier les données de commande de marche de véhicule ; et
lorsque les données de commande de marche de véhicule stockées dans l'unité de stockage de données doivent être envoyées, le passage au mode de travail selon l'instruction reçue de l'unité de commande de manière à envoyer les données de commande de marche de véhicule.

5. Le procédé selon la revendication 2, comprenant :
la fourniture d'une connexion de communication à la LEU ;
la conversion d'informations codées par codage de niveau biphase différentiel (*Differential Bi Phase Level,* DBPL) qui sont reçues par la LEU et dépassent une limite de transmission numérique conventionnelle en les données de commande de marche de véhicule de la balise au sol.

6. Le procédé selon la revendication 1 ou 2, comprenant :
la réception des données de commande de marche de véhicule modulées par la balise embarquée via une deuxième unité d'antenne, pour commander la marche d'un véhicule selon les données de commande de marche de véhicule reçues.

7. Balise au sol fixe, comprenant :
une unité de commande, qui est utilisée pour recevoir une instruction de passer à un mode de mise à jour et recevoir une instruction de passer à un mode de travail ;
une unité de sélection de mode, qui est utilisée pour permettre à la balise au sol fixe de sélectionner de passer au mode de mise à jour ou au mode de travail selon l'instruction reçue de l'unité de commande ;
une première unité d'antenne, la balise au sol fixe recevant des données de mise à jour de données de commande de marche de véhicule via la première unité d'antenne, un signal de fréquence porteuse étant reçu depuis un équipement embarqué moyennant la première unité d'antenne, et la balise au sol fixe envoyant les données de commande de marche de véhicule modulées à une balise embarquée de l'équipement embarqué moyennant la première unité d'antenne ;
une unité de puissance, qui est utilisée pour convertir de l'énergie du signal de fréquence porteuse en une puissance de travail de la balise au sol ;
une unité de stockage de données, qui est utilisée pour modifier les données de commande de marche de véhicule dans l'unité de stockage de données selon les données de mise à jour et stocker les données de commande de marche de véhicule mises à jour dans l'unité de stockage de données ; et
une unité de modulation, qui est utilisée pour effectuer une modulation FSK des données de commande de marche de véhicule pour obtenir les données de commande de marche de véhicule modulées ;
sachant que les données de commande de marche de véhicule sont des données de commande pour la marche d'un véhicule ;
**caractérisée par** une unité de limitation d'amplitude, qui est utilisée pour agencer un condensateur au niveau de la première unité d'antenne, agencer une bille magnétique connectée au condensateur pour extraire une tension aux deux extrémités du condensateur, effectuer un redressement en pont par une diode, et limiter une amplitude du signal de fréquence porteuse reçu dans une plage prédéterminée.

8. Balise au sol commutable, comprenant :
une unité de commande, qui est utilisée pour recevoir une instruction de passer à un mode de mise à jour et recevoir une instruction de passer à un mode de travail ;
une unité de sélection de mode, qui est utilisée pour permettre à la balise au sol commutable de sélectionner de passer au mode de mise à jour ou au mode de travail selon l'instruction reçue de l'unité de commande ;
une première unité d'antenne, la balise au sol commutable recevant des données de mise à jour pour des données de commande de marche de véhicule depuis une unité électronique côté secteur (*Lineside Electronic Unit,* LEU) via la première unité d'antenne, un signal de fréquence porteuse étant reçu depuis un équipement embarqué moyennant la première unité d'antenne, et la balise au sol commutable envoyant les données de commande de marche de véhicule modulées à une balise embarquée de l'équipement embarqué moyennant la première unité d'antenne ;
une unité de stockage de données, qui est utilisée pour modifier les données de commande de marche de véhicule dans l'unité de stockage de données selon les données de mise à jour et stocker les données de commande de marche de véhicule mises à jour dans l'unité de stockage de données ; et
une unité de modulation, qui est utilisée pour effectuer une modulation FSK des données de commande de marche de véhicule pour obtenir les données de commande de marche de véhicule modulées ;
sachant que les données de commande de marche de véhicule sont des données de commande pour la marche d'un véhicule ;
**caractérisée par** une unité de limitation d'amplitude, qui est utilisée pour agencer un condensateur au niveau de la première unité d'antenne, agencer une bille magnétique connectée au condensateur pour extraire une tension aux deux extrémités du condensateur, effectuer un redressement en pont par une diode, et limiter une amplitude du signal de fréquence porteuse reçu dans une plage prédéterminée.

9. La balise au sol fixe selon la revendication 7, comprenant en outre :
une unité de protection contre la surtension, qui est utilisée pour agencer le condensateur au niveau de la première unité d'antenne, l'unité de protection contre la surtension étant connectée au condensateur pour commander la tension dans une plage de tension de sécurité.

10. La balise au sol commutable selon la revendication 8, comprenant en outre :
une unité de protection contre la surtension, qui est utilisée pour agencer le condensateur au niveau de la première unité d'antenne, l'unité de protection contre la surtension étant connectée au condensateur pour commander la tension dans une plage de tension de sécurité.

11. La balise au sol fixe selon la revendication 7 ou 9, sachant que l'unité de sélection de mode est en outre utilisée pour :
lorsque les données de commande de marche de véhicule stockées dans l'unité de stockage de données doivent être modifiées, passer au mode de mise à jour selon l'instruction reçue de l'unité de commande de manière à modifier les données de commande de marche de véhicule ; et
lorsque les données de commande de marche de véhicule stockées dans l'unité de stockage de données doivent être envoyées, passer au mode de travail selon l'instruction reçue de l'unité de commande de manière à envoyer les données de commande de marche de véhicule.

12. La balise au sol commutable selon la revendication 8 ou 10, comprenant en outre :
une unité d'interface, qui est utilisée pour fournir une connexion de communication à la LEU ; et
une unité de conversion de données, qui est utilisée pour convertir des informations codées par codage de niveau biphase différentiel (*Differential Bi Phase Level,* DBPL) qui sont reçues par la LEU et dépassent une limite de transmission numérique conventionnelle en les données de commande de marche de véhicule de la balise au sol.
